# FASCICULE DE BREVET EUROPEEN

(11) **EP 3 733 386 B1**
(45) Date de publication et mention de la délivrance du brevet: **01.05.2024**
(21) Numéro de dépôt: 20171644.6
(22) Date de dépôt: 27.04.2020
(51) Int. Cl.: B29C 70/32, B29C 53/82, B29C 53/80, B29C 53/58, B29C 70/56, B29C 53/66, B29C 70/20

(54) **PROCÉDÉ DE FABRICATION D'UN TUBE EN MATÉRIAU COMPOSITE, DISPOSITIF POUR LA MISE EN OEUVRE DUDIT PROCÉDÉ, ET TUBE OBTENU**
HERSTELLUNGSVERFAHREN EINES ROHRS AUS VERBUNDMATERIAL, VORRICHTUNG FÜR DIE UMSETZUNG DIESES VERFAHRENS UND SO ERHALTENES ROHR
METHOD FOR MANUFACTURING A TUBE MADE OF COMPOSITE MATERIAL, DEVICE FOR IMPLEMENTING SAID METHOD, AND TUBE OBTAINED

(30) Priorité: 30.04.2019 FR 1904569
(43) Date de publication de la demande: 04.11.2020
(73) Titulaire: Conseil et Technique, 31650 Lauzerville (FR)
(72) Inventeur: VALEMBOIS, Guy, 31650 LAUZERVILLE (FR)
(74) Mandataire: Cabinet Bleger-Rhein-Poupon

(56) Documents cités:
- DE-A1- 4 212 135
- FR-A- 1 539 147
- US-A- 4 762 583
- US-A- 5 468 329

## Description

La présente invention a pour objet un procédé de fabrication d'un tube en matériau composite par enroulement de fibres de renfort ou de nappes de fibres de renfort unidirectionnelles noyées dans une matrice thermoplastique ou thermodurcissable, ainsi que dispositif pour la mise en oeuvre dudit procédé, et le tube ainsi obtenu.

Un tel tube trouvera une application, non limitativement, dans le domaine des arbres de transmission et de mâts.

On connaît plusieurs procédés de fabrication de tubes composites, le plus exploité étant celui consistant à déposer des fibres de renfort pré-imprégnées sur un mandrin mû en rotation autour de son axe, le dépôt étant réalisé par au moins un chariot porte-fil mobile le long dudit mandrin. La vitesse de déplacement du robot et celle de rotation du mandrin définissent l'angle de dépôt. La mise en place des fibres par balayage alternatif et longitudinal du chariot dispose les fibres de manière hélicoïdale sur le mandrin en rotation avec croisement des fibres à chaque balayage.

Cependant, on sait que la longueur d'un tissu fini est toujours inférieure à la longueur de la chaîne car le croisement des fils de chaîne avec la trame consomme de la longueur. Cette différence consiste en l'embuvage. Ainsi les fils de chaîne ondulent entre les fils de trame, et ne présentent donc pas de rectitude ce qui diminue la résistance et la rigidité de la pièce fabriquée.

L'embuvage est donc un élément important à prendre en compte lors de la conception d'une pièce composite.

Dans le cas de la fabrication d'un tube par enroulement de fibres ou de nappes de fibres, le croisement des hélicoïdes induit un embuvage des fibres, lequel génère une limitation à la performance finale du tube ainsi constitué.

On connaît le document US 5 468 329 qui concerne l'extrémité d'un mandrin destiné à la fabrication d'un tube par enroulement filamentaire, et plus particulièrement un anneau porteur de broches, adaptable à tous les diamètres de mandrins. Si un tel anneau permet la fabrication d'un tube, ce document n'explique pas comment on pourrait s'affranchir des inconvénients de fabrication de tube à paroi mince réalisée en une seule couche d'enroulement filamentaire, ce qui n'est concevable que par entrecroisement de fils de chaîne et de fils de trame, ce qui génère obligatoirement un embuvage.

La présente invention a pour but de proposer un procédé de fabrication d'un tube en matériau composite par enroulement de fibres de renfort ou de nappes de fibres unidirectionnelles de renfort noyées dans une matrice thermoplastique ou thermodurcissable, ainsi que le dispositif pour la mise en oeuvre dudit procédé et le tube ainsi obtenu, permettant de remédier à l'inconvénient de l'embuvage.

On connaît également le document DE 4212135 qui se rapporte au bobinage d'un fil sur un mandrin, et dans lequel, pour éviter le croisement du fil, il est proposé de superposer plusieurs couches distinctes, où chaque couche est constituée de fibres arrangées en hélicoïdes toutes parallèles, l'angle d'une couche étant différent de celui d'une couche adjacente. Il s'agit toutefois d'un simple dépôt du fil sur le mandrin, qui ne peut pas assurer de s'affranchir totalement d'un risque d'embuvage.

Le document US4762583A divulgue un appareil d'enroulement filamentaire permettant de tendre les boucles de fil sur l'appareil.

Le procédé selon la revendication 1 de fabrication d'un tube en matériau composite par enroulement de fibres de renfort ou de nappes de fibres unidirectionnelles de renfort noyées dans une matrice thermoplastique ou thermodurcissable, consistant à déposer lesdites fibres ou nappes, sur un mandrin mû en rotation autour de son axe longitudinal, au moyen d'au moins un chariot mobile le long dudit mandrin, consistant également à s'affranchir de créer un embuvage en superposant plusieurs couches distinctes, chaque couche étant constituée de fibres ou nappes arrangées en hélicoïdes toutes parallèles, les hélicoïdes d'une couche étant d'angle d'hélice inverse de celui des hélicoïdes de la ou les couches adjacentes, et il se caractérise en ce qu'on maintient les fibres d'une ou de plusieurs couches, sous tension contrôlée pendant la polymérisation.

Un tel procédé permet de s'affranchir des inconvénients de l'embuvage, puisqu'il n'y a pas d'entrelacement des fibres ou nappes de fibres entre elles, le croisement des fibres ou nappes de fibres n'étant réalisé d'une couche par rapport à une autre et qu'il y a contrôle de la tension des fibres.

Selon une caractéristique additionnelle du procédé selon l'invention, on dépose un fil ou une nappe de fil par la conjugaison du déplacement du chariot le long du mandrin et la rotation de ce dernier autour de son axe, et pour chaque couche, à chaque changement de direction dudit chariot correspond d'une part un changement de sens de rotation du mandrin, et d'autre un décalage angulaire du point de départ du dépôt.

Le procédé est différent de ceux habituels d'enroulement avec croisement de fils ou nappe de fils, dans lesquels le mandrin tourne toujours dans le même sens.

Selon une autre caractéristique additionnelle du procédé selon l'invention, on réalise localement en au moins un emplacement, un enroulement circonférentiel, ou quasi circonférentiel, afin de consolider une zone du tube pouvant servir à la réalisation d'interfaces de fixation par usinage.

De cette manière, et en disposant les couches hélicoïdales à plus ou moins 30°, les couches de fibres sont alors décalées de 60° entre elles et sans embuvage, il est possible de réaliser un matériau localement isotropique, ou quasiment isotropique, ce qui lui donne des propriétés susceptibles de supporter des actions mécaniques dans des directions quelconques.

Le dispositif selon la revendication 5 pour la mise en oeuvre du procédé selon l'invention, comprend un mandrin monté en rotation autour de son axe longitudinal, ainsi qu'un chariot de dépôt de fibres ou de nappes de fibres, mobile le long dudit mandrin parallèlement audit axe, ledit mandrin comportant à chacune de ses extrémités une multiplicité d'aiguilles, faisant saillie radialement, et destinées à constituer un moyen d'appui et de renvoi angle pour une fibre ou une nappe de fibres, et à au moins l'une des extrémités du mandrin, les aiguilles radiales sont portées par au moins une bague ou similaire, montée mobile selon l'axe dudit mandrin en éloignement ou rapprochement dudit mandrin, sous l'action d'un moyen moteur.

La mobilité de la ou les bagues est destinée à la réalisation d'une certaine tension des fibres après enroulement et avant polymérisation.

Selon une autre caractéristique additionnelle du dispositif selon l'invention, à au moins l'une des extrémités du mandrin, les aiguilles radiales ou analogues, sont portées par plusieurs bagues ou analogues, empilées axialement, montées mobiles de manière indépendante l'une par rapport aux autres selon l'axe dudit mandrin en éloignement ou rapprochement dudit mandrin, sous l'action d'un moyen moteur.

Dans ce mode de réalisation chaque bague est destinée à la réalisation d'une couche, et pour chacune des couches on peut, lors de la polymérisation, adapter la tension souhaitée.

Le procédé selon l'invention permet la fabrication d'un tube selon la revendication 7 en matériau composite, fait d'un enroulement de fibres de renfort ou de nappes de fibres unidirectionnelles de renfort noyées dans une matrice thermoplastique ou thermodurcissable, sans embuvage, comprenant plusieurs couches de fibres, chacune desdites couches étant distincte des autres, et constituée de fibres ou nappes arrangées en hélicoïdes toutes parallèles, tandis que les hélicoïdes d'une couche sont d'angle d'hélice inverse de celui des hélicoïdes de la ou les couches adjacentes.

Les avantages et les caractéristiques du procédé, du dispositif et du tube selon l'invention, ressortiront plus clairement de la description qui suit et qui se rapporte au dessin annexé, lequel en représente un mode de réalisation non limitatif.

Dans le dessin annexé :
- la figure 1 représente une vue schématique d'une partie d'un tube lors sa fabrication par la mise en oeuvre d'un procédé qui n'est pas couvert par l'invention revendiquée.
- la figure 2 représente une vue schématique illustrant une étape du même procédé.
- la figure 3 représente une vue schématique en perspective d'une partie d'un dispositif de mise en oeuvre du procédé selon l'invention.
- la figure 4 représente une vue schématique d'une variante du même dispositif.
- la figure 5 représente une vue schématique partielle en perspective un tube fabriqué par le procédé selon l'invention.

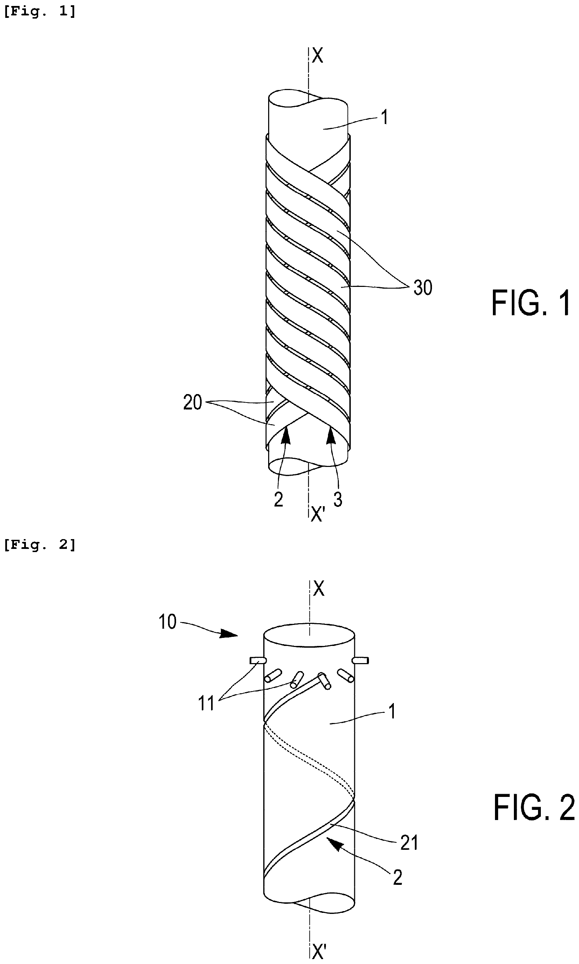

En référence à la figure 1, on peut voir un mandrin 1, sur lequel sont disposées deux couches superposées 2 et 3 de nappes, respectivement 20 et 30, de fibres de renfort unidirectionnelles noyées dans une matrice thermoplastique ou thermodurcissable.

La couche 2 qui est en contact direct avec le mandrin 1, est constituée de nappes 20 disposées en hélicoïdes parallèles, accolées chacune aux deux hélicoïdes voisines, tandis que la couche 3 est constituée de nappes 30, disposées en hélicoïdes parallèles de sens inverse de celui des nappes 20, accolées chacune aux deux hélicoïdes voisines, et recouvrant les nappes 20.

L'enroulement des différentes nappes est obtenu par l'association la rotation du mandrin sur son axe XX', avec les déplacements le long du mandrin 1, parallèlement à l'axe XX', d'un chariot de dépôt.

En référence maintenant à la figure 2, on peut voir un mandrin 1, sur lequel est entamée la réalisation d'une première couche 2, par l'enroulement en hélicoïde d'une fibre 21.

Le mandrin 1 comporte à chacune de ses extrémités 10, dont une seule est visible sur la figure, une multiplicité d'aiguilles 11 faisant saillie radialement. Chaque aiguille 1 est destinée à servir d'appui et de renvoi d'angle à la fibre 21 après réalisation d'une première hélicoïde pour réaliser une seconde hélicoïde parallèle.

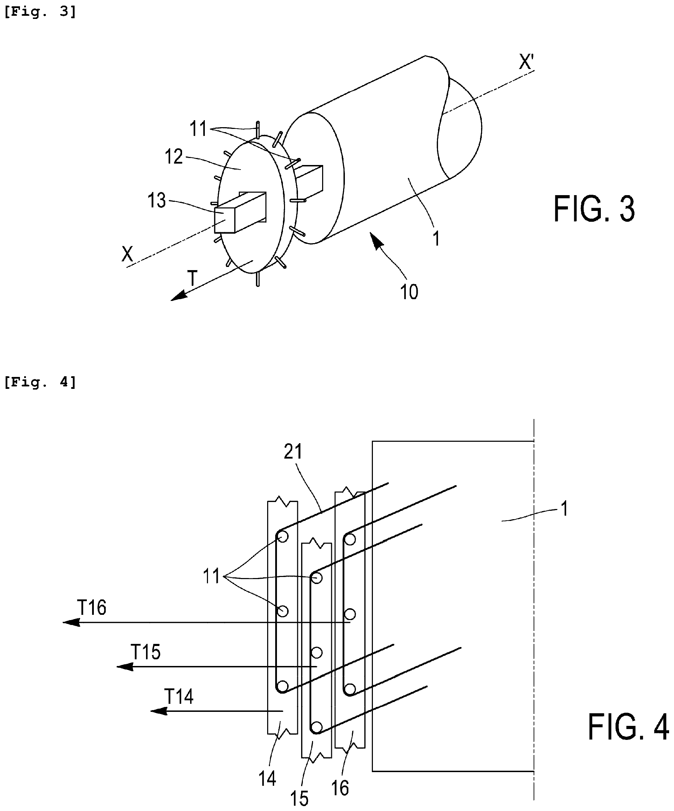

En référence maintenant à la figure 3 on peut voir une variante telle que revendiquée du mandrin 1, et plus particulièrement de son extrémité 10.

Cette extrémité 10 comporte un disque 12 montée coulissant sur une extension axiale 13 du mandrin 1, en sorte de permettre la mobilité de ce disque 1 axialement en rapprochement ou en éloignement du mandrin 1. Ce disque 12, comporte en périphérie une multiplicité d'aiguilles radiales 11.

Après enroulement des fibres ou nappes de fibres en hélicoïdes et en couches, avant polymérisation, le disque 12 est éloigné du mandrin 1 sous un effort de traction T, avec pour conséquence la mise en tension des fibres ou nappes de fibres, tension qui est maintenue pendant la polymérisation.

En référence maintenant à la figure 4, on peut voir l'extrémité 10 d'un mandrin 1, laquelle comporte, non limitativement, trois disques 14, 15 et 16, représentés de manière déployée, conçus de manière identique au disque 12 de la figure précédente 13, à savoir qu'ils sont mobiles axialement par rapport au mandrin 1. De manière avantageuse, chacun des disques 14, 15 et 16, est mobilisable indépendamment des autres.

Chacun des disques 14, 15 et 16, comporte des aiguilles radiales 11, qui permettent de déposer les fibres 21 en hélicoïdes sur le mandrin 1.

Chacun des disques 14, 15 et 16, peut être dédié à la réalisation d'une couche, et avant polymérisation, chacun des disques 14, 15 et 16 est éloigné du mandrin 1, par des efforts de traction différenciés, respectivement T14, T15 et T16, en sorte de permettre, si nécessaire, de réaliser des couches dont les fibres présentent des tensions différentes, en sorte de précontraindre chaque couche selon une optimisation de performance attendue du tube final.

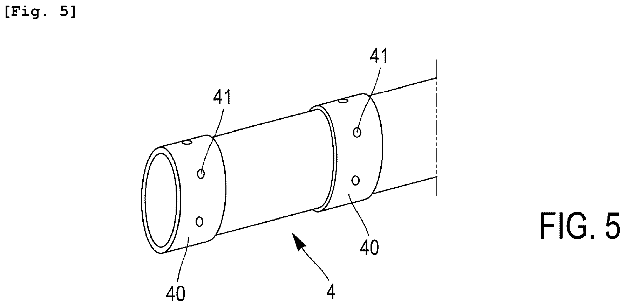

En référence maintenant à la figure 5 on peut voir un tube, et plus particulièrement un arbre 4 destiné à la transmission, qui comporte deux renflements tubulaires 40, dont l'un disposé à une extrémité, qui forment des manchons.

Ces renflements 40 viennent d'apports supplémentaires de matière par un enroulement circonférentiel, ou quasi circonférentiel, sur les couches qui forment le reste du tube, ou sous les mêmes couches à savoir sur le mandrin, non représenté, ou bien entre des couches.

Si les hélicoïdes des différentes couches sont à 30°, les couches de fibres sont alors décalées de 60° entre elles et sans embuvage, en sorte que les renflements 40 sont constitués de matériau composite quasi isotropique, ce qui permet de réaliser des interfaces de fixation par usinage, tels que des trous taraudés 41.

## Revendications

1. Procédé de fabrication d'un tube en matériau composite par enroulement de fibres de renfort (21) ou de nappes (20, 30) de fibres unidirectionnelles de renfort noyées dans une matrice thermoplastique ou thermodurcissable, consistant à déposer lesdites fibres (21) ou nappes (20, 30), sur un mandrin (1) mû en rotation autour de son axe longitudinal (XX'), au moyen d'au moins un chariot mobile le long dudit mandrin (1), consistant également à s'affranchir de créer un embuvage en superposant plusieurs couches distinctes (2, 3), où chaque couche (2, 3) est constituée de fibres (21) ou nappes (20, 30) arrangées en hélicoïdes toutes parallèles, tandis que les hélicoïdes d'une couche (2, 3) sont d'angle d'hélice inverse de celui des hélicoïdes de la ou les couches adjacentes, **caractérisé en ce qu'**on maintient les fibres d'une ou de plusieurs couches (2, 3), sous tension contrôlée pendant la polymérisation.

2. Procédé de fabrication selon la revendication 1, **caractérisé en ce qu'**on dépose un fil (21) ou une nappe (20, 30) de fil par la conjugaison du déplacement du chariot le long du mandrin (1) et la rotation de ce dernier autour de son axe, et pour chaque couche, à chaque changement de direction dudit chariot correspond d'une part un changement de sens de rotation du mandrin (1), et d'autre un décalage angulaire du point de départ du dépôt.

3. Procédé de fabrication selon la revendication 1 ou la revendication 2, **caractérisé en ce qu'**on maintient les fibres de chacune des couches (2, 3), sous tension contrôlée pendant la polymérisation, de manière indépendante pour chacune desdites couches.

4. Procédé de fabrication selon l'une quelconque des revendications 1 à 3, **caractérisé en ce qu'**on on réalise localement en au moins un emplacement, un enroulement circonférentiel, ou quasi circonférentiel, afin de consolider une zone (40) du tube (4) pouvant servir à la réalisation d'interfaces de fixation par usinage.

5. Dispositif pour la mise en oeuvre du procédé selon l'une quelconque des revendications 1 à 4, comprenant un mandrin (1) monté en rotation autour de son axe longitudinal (XX'), ainsi qu'un chariot de dépôt de fibres (21) ou de nappes (20, 30) de fibres, mobile le long dudit mandrin (1) parallèlement audit axe (XX'), ledit mandrin (1) comportant à chacune de ses extrémités (10) une multiplicité d'aiguilles (11), faisant saillie radialement, et destinées à constituer un moyen d'appui et de renvoi angle pour une fibre (21) ou une nappe (20 30) de fibres, et à au moins l'une des extrémités (10) du mandrin (1), les aiguilles radiales (11), sont portées par au moins une bague ou analogue (12), montée mobile selon l'axe (XX') dudit mandrin (1) en éloignement ou rapprochement dudit mandrin (1), sous l'action d'un moyen moteur (T), pour une mise en tension contrôlée desdites fibres (21) ou nappes (20, 30).

6. Dispositif selon la revendication 5, **caractérisé en ce qu'**à au moins l'une des extrémités (10) du mandrin (1), les aiguilles radiales (11), sont portées par plusieurs bagues ou analogues (14, 15, 16), empilées axialement, montées mobiles de manière indépendante selon l'axe (XX') dudit mandrin (1) en éloignement ou rapprochement dudit mandrin (1), sous l'action d'un moyen moteur (T14, T15, T16).

7. Tube en matériau composite, fait d'un enroulement sans embuvage de fibres de renfort (21) ou de nappes (20, 30) de fibres unidirectionnelles de renfort noyées dans une matrice thermoplastique ou thermodurcissable, le tube en matériau composite étant obtenu par un procédé de fabrication selon l'une des revendications 1 à 4, et comprend plusieurs couches de fibres (2, 3), chacune desdites couches (2, 3) étant distincte des autres, et constituée de fibres ou nappes arrangées en hélicoïdes toutes parallèles, tandis que les hélicoïdes d'une couche sont d'angle d'hélice inverse de celui des hélicoïdes de la ou les couches adjacentes.

## Patentansprüche

1. Verfahren zum Herstellen eines Rohrs aus Verbundmaterial durch Wickeln von Verstärkungsfasern (21) oder von Lagen (20, 30) aus unidirektionalen Verstärkungsfasern, die in eine thermoplastische oder duroplastische Matrix eingebettet sind, wobei das Verfahren darin besteht, die Fasern (21) oder Lagen (20, 30) auf einem Dorn (1) abzulegen, der mittels mindestens eines entlang des Dorns (1) beweglichen Schlittens um seine Längsachse (XX') in Drehung versetzt wird, und das auch darin besteht, dass durch das Übereinanderlegen mehrerer getrennter Schichten (2, 3), wobei jede Schicht (2, 3) aus Fasern (21) oder Lagen (20, 30) besteht, die in Schraubenlinien angeordnet sind, die alle parallel zueinander verlaufen, keine Verwicklungen erzeugt werden, wobei die Schraubenlinien einer Schicht (2, 3) einen umgekehrten Steigungswinkel zu dem der Schraubenlinien der benachbarten Schicht(en) aufweisen, **dadurch gekennzeichnet, dass** die Fasern einer oder mehrerer Schichten (2, 3) während der Polymerisation unter kontrollierter Spannung gehalten werden.

2. Herstellungsverfahren nach Anspruch 1, **dadurch gekennzeichnet, dass** ein Faden (21) oder eine Fadenlage (20, 30) durch die Kombination der Bewegung des Schlittens entlang des Dorns (1) und der Drehung des letzteren um seine Achse abgelegt wird, und für jede Schicht entspricht jede Richtungsänderung des Schlittens einerseits einer Änderung der Drehrichtung des Dorns (1) und andererseits einer Winkelverschiebung des Ausgangspunkts der Ablagerung.

3. Herstellungsverfahren nach Anspruch 1 oder 2, **dadurch gekennzeichnet, dass** die Fasern jeder der Schichten (2, 3) während der Polymerisation unter kontrollierter Spannung gehalten werden, und zwar unabhängig für jede der Schichten.

4. Herstellungsverfahren nach einem der Ansprüche 1 bis 3, **dadurch gekennzeichnet, dass** lokal an mindestens einer Stelle eine umlaufende oder quasi umlaufende Wicklung vorgenommen wird, um einen Bereich (40) des Rohrs (4) zu verfestigen, der zur Herstellung von Befestigungsschnittstellen durch maschinelle Bearbeitung dienen kann.

5. Vorrichtung zur Durchführung des Verfahrens nach einem der Ansprüche 1 bis 4, umfassend einen Dorn (1), der um seine Längsachse (XX') drehbar montiert ist, sowie einen Schlitten zum Ablegen von Fasern (21) oder Faserlagen (20, 30), der entlang des Dorns (1) parallel zur Achse (XX') beweglich ist, wobei der Dorn (1) an jedem seiner Enden (10) eine Vielzahl von Nadeln (11) umfasst, die radial vorstehen und dazu bestimmt sind, ein Stütz- und Winkelumlenkmittel für eine Faser (21) oder eine Faserlage (20 30) zu bilden, und an mindestens einem der Enden (10) des Dorns (1) die radialen Nadeln (11) von mindestens einem Ring oder Ähnlichem (12) getragen werden, die entlang der Achse (XX') des Dorns (1) unter der Wirkung eines Antriebsmittels (T) beweglich von dem Dorn (1) weg oder zu ihm hin montiert sind, um die Fasern (21) oder Lagen (20, 30) kontrolliert zu spannen.

6. Vorrichtung nach Anspruch 5, **dadurch gekennzeichnet, dass** an mindestens einem der Enden (10) des Dorns (1) die radialen Nadeln (11) von mehreren axial gestapelten Ringen oder dergleichen (14, 15, 16) getragen werden, die unabhängig voneinander entlang der Achse (XX') des Dorns (1) unter der Wirkung eines Antriebsmittels (T14, T15, T16) beweglich von dem Dorn (1) weg oder zu ihm hin montiert sind.

7. Rohr aus Verbundmaterial, hergestellt aus einer Wicklung ohne Verwicklungen von Verstärkungsfasern (21) oder Lagen (20, 30) aus unidirektionalen Verstärkungsfasern, die in eine thermoplastische oder duroplastische Matrix eingebettet sind, wobei das Rohr aus Verbundmaterial durch ein Herstellungsverfahren nach einem der Ansprüche 1 bis 4 erhalten wird und mehrere Faserschichten (2, 3) umfasst, wobei sich jede dieser Schichten (2, 3) von den anderen unterscheidet und aus Fasern oder Lagen besteht, die in Schraubenlinien angeordnet sind, die alle parallel verlaufen, während die Schraubenlinien einer Schicht einen umgekehrten Steigungswinkel zu dem der Schraubenlinien der benachbarten Schicht(en) hat.

## Claims

1. A method for manufacturing a tube made of composite material by winding reinforcing fibers (21) or laps (20, 30) of unidirectional reinforcing fibers embedded in a thermoplastic or thermosetting matrix, consisting in depositing said fibers (21) or laps (20, 30), on a mandrel (1) driven in rotation about its longitudinal axis (XX'), by means of at least one carriage movable along said mandrel (1), also consisting in eliminating the creation of a crimp by superimposing several distinct layers (2, 3), wherein each layer (2, 3) consists of fibers (21) or laps (20, 30) arranged in helicoids that are all parallel, while the helicoids of one layer (2, 3) are of a helical angle opposite that of the adjacent layer(s), **characterized in that** the fibers of one or more layers (2, 3) are held under controlled tension during the polymerization.

2. The manufacturing method according to claim 1, **characterized in that** a wire (21) or a lap of wire (20, 30) is deposited by the conjugation of the movement of the carriage along the mandrel (1) and the rotation of the carriage about its axis, and for each layer, each change of direction of said carriage corresponds to a change in direction of rotation of the mandrel (1), and another angular offset of the starting point of the deposit.

3. The manufacturing method according to claim 1 or claim 2, **characterized in that** the fibers of each of the layers (2, 3) are held under controlled tension during the polymerization, independently for each of said layers.

4. The manufacturing method according to any one of claims 1 to 3, **characterized in that** at least at one location, a circumferential or quasi-circumferential winding is produced locally in order to consolidate a zone (40) of the tube (4) that can be used to produce attachment interfaces by machining.

5. A device for the implementation of the method according to any one of claims 1 to 4, comprising a mandrel (1) mounted rotatably about its longitudinal axis (XX'), as well as a carriage for depositing fibers (21) or laps (20, 30) of fibers, movable along said mandrel (1) parallel to said axis (XX'), said mandrel (1) comprising at each of its ends (10) a multiplicity of needles (11), protruding radially, and intended to constitute a means of support and return angle for a fiber (21) or a lap (20, 30) of fibers, and at least one of the ends (10) of the mandrel (1) the radial needles (11) are carried by at least one ring or the like (12), mounted movable along the axis (XX') of said mandrel (1) away from or towards said mandrel (1), under the action of a motor means (T) for placing said fibers (21) or laps (20, 30) under controlled tension.

6. The device according to claim 5, **characterized in that** at least at one of the ends (10) of the mandrel (1), the radial needles (11), are carried by several rings or the like (14, 15, 16), stacked axially, mounted movable independently along the axis (XX') of said mandrel (1) away from or towards said mandrel (1), under the action of a motor means (T14, T15, T16).

7. A tube of composite material, made of winding, without crimping, reinforcing fibers (21) or laps (20, 30) of unidirectional reinforcing fibers embedded in a thermoplastic or thermosetting matrix, the tube made of composite material being obtained by a manufacturing method according to one of claims 1 to 4, and comprising several layers of fibers (2, 3), each of said layers (2, 3) being distinct from the others, and consisting of fibers or laps arranged in helicoids that are all parallel, while the helicoids of one layer are of a helical angle opposite that of the helicoids of the adjacent layer(s).
